# EUROPEAN PATENT SPECIFICATION

(11) **EP 2 505 615 B1**
(45) Date of publication and mention of the grant of the patent: **07.05.2014**
(21) Application number: 11160926.9
(22) Date of filing: 01.04.2011
(51) Int. Cl.: C09C 1/02, D21H 17/00

(54) **Self-binding pigment hybrid**
Selbstbindendes Pigmenthybrid
Hybride de pigments autoliants

(43) Date of publication of application: 03.10.2012
(73) Proprietor: Omya International AG, 4665 Oftringen (CH)
(72) Inventor: Gane, Patrick A.C., 4852 Rothrist (CH); Buri, Matthias, 4852 Rothrist (CH); Rentsch, Samuel, 4663 Aarburg (CH); Meuwly, Julie, 4663 Aarburg (CH)
(74) Representative: Glas, Holger

(56) References cited:
- WO-A2-2006/008657
- US-A- 5 708 162

## Description

Binders and mineral materials are among the main constituents of paints and of paper coating colours. The former, generally latex-based and in the form of aqueous suspensions or dispersions, provide the necessary adhesion to a support and cohesion between the elements forming goods to be produced, such as paint or paper but also such as agriculture fertilizer. The latter, commonly calcium carbonate, may provide improvements, for example, in paper and painting quality and agriculture properties, notably relative to its optical properties.

The concept of self-binding pigment particles is known to industry: it refers to distinct, solid particles, formed of mineral material and binder that are intimately bound to one another. The internal cohesion forces are such as to provide the self binding pigment particles with excellent mechanical stability. Such particles may be directly implemented in a variety of applications.

Implementing self-binding pigment particles avoids the logistic difficulties of handling mineral materials and binders separately, and further avoids the unwanted physical and chemical interactions developed in comparable mixtures of minerals and binders.

Self-binding pigment particles are prepared by a process implementing at least one step of grinding mineral materials in the presence of binder, where grinding refers to an operation leading to a reduction in the particle size; the mineral materials in the self-binding pigment particles have a smaller diameter than the initial mineral material used to produce them. Such self-binding pigment particles are described in a number of documents, including WO 2006/008657, WO 2006/128814, and WO 2008/139292.

However, the processes for preparing self-binding mineral pigment particles known in the art are limited to the preparation or the co-grinding of suspensions having a low solids content. High solid content suspensions could only be processed if corresponding dispersants would be added as mentioned, e.g., in EP 1 747 252 which relates to a method for producing surface-modified inorganic fillers or pigments of a desired particle size. Said method is characterised in that filler or pigment slurries of inorganic fillers or pigments are milled to the desired particle size under the action of compressive and shear forces using polymer dispersions in combination with milling aids and/or dispersing agents.

The addition of dispersant, however, *inter alia* affects the adsorption of the binder to the particles during the co-grinding. The preparation of low solids content suspensions has the disadvantage that the obtained grinding product has to be up-concentrated before being shipped to other facilities for further processing. During the time and energy consuming up-concentrating step, very often an undesired loss of polymeric binder is observed, and, additionally, unwanted agglomerates are formed. Furthermore, the prior art processes often lead to a suspension having a high total organic content of the aqueous phase of the ground suspension.

In view of the foregoing, improving the self-binding pigment particle production process remains of interest to the skilled man. It would be especially desirable to provide a process for making self-binding mineral pigment particles which can be applied to mineral pigment suspensions having a high solids content, thus, avoiding an energy and time consuming up-concentrating step and, e.g., the formation of significant amounts of unwanted agglomerates.

A further object of the present invention is to reduce or eliminate fossil based binder raw material to follow at most the Kyoto protocol to reduce fossil CO₂ pollution of the atmosphere during combustion of the final goods.

The Kyoto Protocol is an international agreement linked to the United Nations Framework Convention on Climate Change. The major feature of the Kyoto Protocol is that it sets binding targets for 37 industrialized countries and the European community for reducing greenhouse gas (GHG) emissions. This amounts to an average of five per cent against 1990 levels over the five-year period 2008 to 2012. The Kyoto Protocol was adopted in Kyoto, Japan, on 11 December 1997 and entered into force on 16 February 2005.

The foregoing and other objectives are solved by the subject-matter as defined herein in the independent claims.

According to one aspect of the present invention, a process for preparing self-binding pigment particles is provided, the process comprising the following steps:
a) providing an aqueous mineral pigment material suspension;
b) providing at least one polymeric binder, wherein the binder comprises at least one modified polysaccharide having a degree of carboxylation in the range of 0.4 to 2.0 and having an intrinsic viscosity in the range of 3 to 300 ml/g,
   wherein the carbon of the binder shows a rate of nuclear transformation of ¹⁴C to ¹²C of between 900 and 920 transformations per hour and per gram carbon in the binder;
c) mixing the binder of step b) with the aqueous mineral pigment material suspension of step a) and adjusting the solids content of the obtained suspension so that it is from 45 to 80 wt.-%, based on the total weight of the suspension;
d) grinding the aqueous mineral material suspension of step c) until the fraction of self-binding pigment particles having a particle size of less than 1 µm is greater than 5 wt.-%, based on the total weight of the pigment particles.

The inventors of the present invention found that it is possible to prepare self-binding pigment particles directly in a high solids content suspension of the mineral pigment. This is achieved by providing in a first step an aqueous mineral pigment material suspension. Furthermore, a specific binder is provided. The binder is mixed with the aqueous mineral pigment material suspension. After adjusting the suspension to a high solids content of from 45 to 80 wt.-%, based on the total weight of the suspension, the suspension is ground in order to obtain self-binding pigment particles until the fraction of self-binding pigment particles having a particle size of less than 1 µm is greater than 5 wt.-%, based on the total weight of the pigment particles..

According to a second aspect, the present invention refers to a self-binding pigment particle suspension which is obtainable by the process according to the present invention.

Another aspect of the present invention refers to the use of the inventive self-binding pigment particle suspension in paper, plastics, paint, concrete and/or agriculture applications.

Advantageous embodiments of the inventive method are defined in the corresponding sub-claims.

According to one embodiment, in step c) the binder is added to the aqueous mineral pigment suspension in an amount from 0.1 to 10.0 wt.-%, preferably 0.2 to 5 wt.-%, more preferably 0.25 to 3.0 wt.-%, based on the total weight of the suspension. According to another embodiment, the binder is in form of a solution or a dry material, preferably in form of an aqueous solution having a binder concentration from 1 to 70 wt.-%, preferably from 2 to 55 wt.-%, more preferably from 5 to 50 wt.-%, and most preferably from 30 to 50 wt.-%, based on the total weight of the solution.

According to one embodiment the binder only consists of at least one modified polysaccharide. According to another embodiment the at least one modified polysaccharide is carboxymethylcellulose. According to still another embodiment the binder is composed of a mixture of two or more types of modified polysaccharide, wherein at least one has a degree of carboxylation in the range of 0.4 to 2.0 and an intrinsic viscosity in the range of 3 to 300 ml/g.

According to one embodiment the solids content is adjusted so that it is from 50 to 80 wt.-%, more preferably to 60 to 79 wt.-%, most preferably to 65 to 78 wt.-%, based on the total weight of the suspension.

According to one embodiment the carboxylic groups of the at least one modified polysaccharide are at least partly neutralized by adding to the aqueous mineral pigment material suspension prior or during the grinding step d) one or more polyvalent cations, wherein the polyvalent cations preferably are selected from Sr²⁺, Ca²⁺, or Mg²⁺, and most preferably from Ca²⁺ added in form of Ca(OH)₂ in suspension and/or solution. According to another embodiment the carboxylic groups of the at least one modified polysaccharide are at least partly neutralized by adding to the aqueous mineral pigment material suspension prior or during the grinding step d) one or more polyvalent cations, *in situ* formed, by adding an acid, preferably H₃PO₄, or acidic reacting salt, preferably CaHPO₄. According to still another embodiment the carboxylic groups of the at least one modified polysaccharide are at least partly neutralized by adding to the aqueous mineral pigment material suspension prior or during the grinding step d) one or more monovalent cations, wherein the monovalent cations preferably are selected from Li⁺, Na⁺, or K⁺.

According to one embodiment the carboxylic groups of the at least one modified polysaccharide are at least partly neutralized by adding to the aqueous mineral pigment material suspension prior or during the grinding step d) a combination of one or more polyvalent cations and one or more monovalent cations, wherein the polyvalent cations preferably are selected from Sr²⁺, Ca²⁺, or Mg²⁺, and most preferably from Ca²⁺ added in form of Ca(OH)₂ in suspension and/or solution, and wherein the monovalent cations preferably are selected from Li⁺, Na⁺, or K⁺.

According to one embodiment the grinding step d) is carried out until the fraction of self-binding pigment particles having a particle size of less than 1 µm is greater than 20 wt.-%, preferably greater than 60 wt.-%, more preferably greater than 75 wt.-%, and most preferably greater than 85 wt.-%, based on the total weight of the pigment particles. According to another embodiment before or during or after steps c) and/or d) a dispersing agent is added.

According to one embodiment said mineral pigment material is selected from calcium carbonate, calcium carbonate containing minerals, mixed carbonate based fillers, or mixtures thereof, and wherein the calcium carbonate containing minerals preferably comprise dolomite, and the mixed carbonate based fillers are preferably selected from calcium associated with magnesium, clay, talc, talc-calcium carbonate mixtures, calcium carbonate-kaolin mixtures, or mixtures of natural calcium carbonate with aluminium hydroxide, mica or with synthetic or natural fibers or co-structures of minerals, preferably talc-calcium carbonate or calcium carbonate-titanium dioxide or talc- titanium dioxide co-structures. According to one embodiment the calcium carbonate is a ground natural calcium carbonate, a precipitated calcium carbonate, a modified calcium carbonate, or a mixture thereof.

According to one embodiment the degree of carboxylation of the at least one modified polysaccharide is in the range of 0.4 to 2.0, 0.5 to 1.8, 0.6 to 1.6, or 0.7 to 1.5. According to another embodiment the at least one modified polysaccharide has a degree of carboxylation of 1 or more, and an intrinsic viscosity in the range of 5 to 250 ml/g, preferably 5 to 150 ml/g, and more preferably 10 to 100 ml/g. According to still another embodiment the at least one modified polysaccharide has a carboxylation degree of less than 1, and an intrinsic viscosity in the range of 5 to 70 ml/g, preferably 5 to 50 ml/g, and more preferably 10 to 30 ml/g.

According to one embodiment the intrinsic viscosity of the modified polysaccharide provided in step b) is adjusted by addition of at least hydrogen peroxide, optionally in presence of an alkali peroxide, in two to five steps.

According to one embodiment the grinding step d) is carried out at a temperature from 30 to 110°C, preferably from 55 to 105°C. According to another embodiment the grinding step d) is carried out in batch or continuously, preferably continuously.

According to one embodiment the self-binding pigment particle suspension is used in the wet end process of a paper machine, in cigarette paper and/or coating applications, as support for rotogravure and/or offset and/or digital printing.

According to another embodiment, the self-binding pigment particle suspension is used to reduce sun light and UV exposure of plant leaves.

Throughout the present document, the "degree of carboxylation" is specified in respect to the total amount of hydroxyl groups per unmodified monomer unit of the original polysaccharide.

The term "intrinsic viscosity" as used in the context of the present invention is a measure of the capability of a polymer in solution to enhance the viscosity of the solution and is specified in ml/g.

Throughout the present document, the "particle size" of a calcium carbonate product is described by its distribution of particle sizes. The value *dₓ* represents the diameter relative to which *x* % by weight of the particles have diameters less than *d*ₓ. This means that the *d*₂₀ value is the particle size at which 20 wt.-% of all particles are smaller, and the *d*₇₅ value is the particle size at which 75 wt.-% of all particles are smaller. The *d*₅₀ value is thus the weight median particle size, i.e. 50 wt.-% of all grains are bigger or smaller than this particle size. For the purpose of the present invention the particle size is specified as weight median particle size *d*₅₀ unless indicated otherwise. For determining the weight median particle size *d*₅₀ value for particles having a *d*₅₀ value between 0.4 and 2 µm, a Sedigraph 5100 device from the company Micromeritics, USA, can be used.

A "suspension" or "slurry" in the meaning of the present invention comprises insoluble solids and water, and optionally further additives and usually contains large amounts of solids and, thus, is more viscous and can be of higher density than the liquid from which it is formed.

Throughout the present application and in the claims, the "rate of nuclear carbon transformation from ¹⁴C to ¹²C" of binders is measured using the traditional methods for analysis of the rate of nuclear carbon transformation from ¹⁴C into ¹²C known hitherto. These methods are based on a stage of preparation consisting of a thermal decomposition at a high temperature (approximately 1000°C) by combustion or calcination of the sample for analysis, followed by collection of the released carbon dioxide which is trapped at low temperature before its reduction, by catalytic hydrogenation, into elemental carbon atoms, the composition of which in ¹³C/¹²C and ¹⁵N/¹⁴N isotopes, and also ¹⁴C isotopes, is measured by a mass spectrophotometer.

Throughout the present application and in the claims, the "rate of nuclear carbon transformation from ¹⁴C to ¹²C" of binders is determined after grinding the binder pigment hybrid by diluting the ground suspension with water to 1 wt.-%, filtering the diluted suspension at 50 to 500 mbar, using 0.2 µ membrane filters, drying the clear solution after filtering at 120°C to < 1 wt.-% moisture, and measuring the sample as described above using accelerator mass spectrometry (AMS).

The inventive process for preparing self-binding pigment particles provides several important advantages. Firstly, the inventive process provides a very good adsorption of the binder to the particle surface. Additionally, the formation of unwanted aggregates is reduced by applying the inventive process since a subsequent up-concentrating step can be avoided due to the processing of a high solids content suspension.

In the following the details and preferred embodiments of the inventive process will be set out in more detail. It is to be understood that these technical details and embodiments also apply to the inventive self-binding pigment particle suspensions and their use.

### Step a)

In step a) of the process according to the present invention an aqueous mineral pigment material suspension is provided. The aqueous mineral pigment material suspension is obtained by mixing a mineral pigment material with water.

The mineral pigment material to be processed according to the inventive process may be selected from calcium carbonate, calcium carbonate containing minerals, mixed carbonate based fillers, or mixtures thereof.

According to a preferred embodiment of the present invention, the mineral pigment material is a calcium carbonate. Calcium carbonate may be a ground natural calcium carbonate, also named heavy calcium carbonate, a precipitated calcium carbonate, also named light calcium carbonate, a modified calcium carbonate, or a mixture thereof.

"Ground natural calcium carbonate" (GNCC) in the meaning of the present invention is a calcium carbonate obtained from natural sources, such as limestone, marble, calcite or chalk, and processed through a wet and/or dry treatment such as grinding, screening and/or fractionation, for example by a cyclone or classifier.

"Modified calcium carbonate" (MCC) in the meaning of the present invention may feature a natural ground or precipitated calcium carbonate with an internal structure modification or a surface-reaction product. According to a preferred embodiment of the present invention, the modified calcium carbonate is a surface-reacted calcium carbonate.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water. PCC may be vaterite, calcite or aragonite.

According to one embodiment of the present invention, the calcium carbonate-containing mineral comprises dolomite.

According to a preferred embodiment, the mixed carbonate based fillers are selected from calcium associated with magnesium and analogues or derivatives, various matter such as clay or talc or analogues or derivatives, and mixtures of these fillers, such as, for example, talc-calcium carbonate or calcium carbonate-kaolin mixtures, or mixtures of natural calcium carbonate with aluminium hydroxide, mica or with synthetic or natural fibers or co-structures of minerals such as talc-calcium carbonate or talc-titanium dioxide or calcium carbonate-titanium dioxide co-structures.

According to a preferred embodiment of the present invention, the aqueous mineral pigment material suspension has a solids content from 50 to 80 wt.-%, preferably from 60 to 79 wt.-%, most preferably from 65 to 78 wt.-%, based on the total weight of the suspension.

### Step b)

In step b) of the process according to the present invention at least one polymeric binder is provided, wherein the binder comprises at least one modified polysaccharide having a degree of carboxylation in the range of 0.4 to 2.0 and having an intrinsic viscosity in the range of 3 to 300 ml/g, and wherein the carbon of the binder shows a rate of nuclear transformation of ¹⁴C to ¹²C of between 900 and 920 transformations per hour and per gram carbon in the binder..

According to another embodiment of the present invention, the binder is composed of a mixture of two or more types of modified polysaccharide, wherein at least one has a degree of carboxylation in the range of 0.4 to 2.0 and an intrinsic viscosity in the range of 3 to 300 ml/g.

According to one embodiment of the present invention, the modified polysaccharide has a degree of carboxylation in the range of 0.4 to 2.0, preferably of 0.5 to 1.8, more preferably of 0.6 to 1.6, and most preferably of 0.7 to 1.5.

According to another embodiment of the present invention, the intrinsic viscosity of the at least one modified polysaccharide is in the range of 5 to 250 ml/g, preferably 5 to 220 ml/g, and more preferably of 10 to 200 ml/g.

According to a preferred embodiment of the present invention, the at least one modified polysaccharide has a degree of carboxylation of 1 or more, and an intrinsic viscosity in the range of 5 to 250 ml/g, preferably 5 to 150 ml/g, and more preferably 10 to 100 ml/g.

According to another preferred embodiment of the present invention, the at least one modified polysaccharide has a carboxylation degree of less than 1, and an intrinsic viscosity in the range of 5 to 70 ml/g, preferably 5 to 50 ml/g, and more preferably 10 to 30 ml/g.

Polysaccharides are polymeric carbohydrate structures, formed of repeating units (at least 10) joined together by glycosidic bonds. These structures may be linear, but may also contain various degrees of branching. Polysaccharides may also contain slight modifications of the repeating unit. Exemplary polysaccharides are starch, cellulose, or glycogen, but also structural polysaccharides such as cellulose and chitin.

"Modified polysaccharides" in the meaning of the present invention are polysaccharides, wherein at least a part of the hydroxyl groups is carboxylated. Additionally, the modified polysaccharides may contain other modifications such as aldehyde groups.

Modified polysaccharides according to the present invention may comprise the following structure: 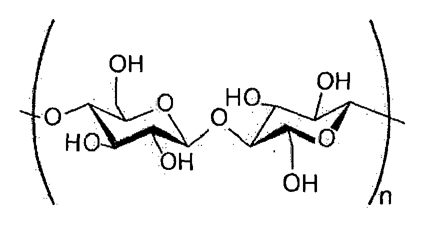 wherein a part of the hydroxyl groups is carboxylated and "n" is indirectly represented by the intrinsic viscosity.

According to a preferred embodiment of the present invention, the at least one modified polysaccharide is carboxymethylcellulose (CMC).

Carboxymethylcellulose (CMC) may be prepared from cellulose by reaction with monochloroacetic acid in the presence of caustic soda to form the sodium salt of carboxymethylcellulose. Each repeating D-glycose unit contains three hydroxyl groups capable of etherification, to give a maximum charge density of three carboxylic groups per monomer unit (i.e., a degree of substitution of three). The molecular weight and the intrinsic viscosity of the carboxymethylcellulose-based binder materials can be adjusted by the treatment with hydrogen peroxide (H₂O₂). Reference is made to DE 1 543 116 A1 describing a method for the preparation of low viscous, water-soluble CMC by oxidative degradation with H₂O₂ (hydrogen peroxide) and to DE 44 11 681 A1 describing the dependency of the degradation of polysaccharide ether on the amount of oxidizing agent, temperature and duration of the treatment.

The intrinsic viscosity can be adjusted by any method that is known to the person skilled in the art, e.g., by addition of peroxides, and the degree of carboxylation of modified polysaccharide viscosity can be adjusted by any method that is known to the person skilled in the art, e.g., by addition of chloroacetic acid or salts thereof.

In a preferred embodiment of the present invention, the intrinsic viscosity is adjusted by a multiple step addition of peroxide, more preferred in two to five steps.

In a further preferred embodiment different peroxides are in use in the different steps, such as alkali peroxides, e.g., sodium peroxide in combination with hydrogen peroxide. According to an exemplary embodiment of the present invention, the peroxide for multiple step addition is a combination of hydrogen peroxide and alkali peroxide, where the amount of alkali peroxide controls the pH during the process.

According to another exemplary embodiment of the present invention, the intrinsic viscosity of the at least one modified polysaccharide provided in step b) is adjusted by addition of at least hydrogen peroxide, optionally in presence of an alkali peroxide, preferably in two to five steps.

According to one embodiment of the present invention, the modified polysaccharide employed in the process according to the present invention has a pH from 4.5 to 12, preferably from 7 to 11, and more preferably from 8.0 to 10.5.

The modified polysaccharide can be provided as solution or dry material. According to a preferred embodiment, the modified polysaccharide is in form of an aqueous solution.

According to one embodiment of the present invention, the binder is in form of an aqueous solution having a binder concentration from 1 to 70 wt.-%, preferably from 2 to 55 wt.-%, more preferably from 5 to 50 wt.-%, and most preferably from 30 to 50 wt.-%, based on the total weight of the solution. The modified polysaccharide solution can be concentrated, for example, by ultrafiltration or thermal or drying. Dry modified polysaccharide is preferably produced by thermal drying, more preferably by spray drying and has a solids content of more than 90, preferably from 95 to 99.9 wt.-%, based on the total weight of the modified polysaccharide.

According to a preferred embodiment of the present invention, the binder only consists of at least one modified polysaccharide, preferably carboxymethylcellulose.

### Step c)

In step c) of the process according to the present invention, the binder of step b) is mixed with the aqueous mineral pigment material suspension of step a). The solids content of the obtained suspension, if below 45 wt.-%, is adjusted so that it is from 45 to 80 wt.-%, based on the total weight of the suspension.

The solids content of the suspension can be adjusted by the methods known to the skilled person. To adjust the solids content of an aqueous mineral material comprising suspension, the suspension may be partially or fully dewatered by a filtration, centrifugation or evaporation process. Alternatively, water may be added to the solid mineral material (e.g. resulting from filtration) until the desired solids content is obtained.

According to a preferred embodiment of the present invention, the solids content of the suspension to be ground during step d) is adjusted so that it is from 50 to 80 wt.-%, more preferably from 60 to 79 wt.-%, most preferably from 65 to 78 wt.-%, based on the total weight of the suspension.

According to one embodiment of the present invention, in step c) the binder is added to the aqueous mineral pigment suspension in an amount from 0.1 to 10.0 wt.-%, preferably in an amount from 0.2 to 5 wt.-%, more preferably in an amount from 0.25 to 3.0 wt.%, based on the total weight of the suspension.

According to one embodiment of the present invention, the carboxylic groups of the at least one modified polysaccharide are at least partly neutralized by adding to the aqueous mineral pigment material suspension prior or during the grinding step d) one or more monovalent cations. Preferably, the monovalent cations are selected from Li⁺, Na⁺ and K⁺. The monovalent cations may be added in the form of an aqueous solution, suspension or powder, and preferably in the form of a solution.

It was found by the inventors that the addition of polyvalent cations to the suspension provides further advantages and especially provides improved adsorption properties of the binder comprising modified polysaccharide to the surface of the mineral. The polyvalent cations can be added during the preparation of the modified polysaccharide, the molecular weight adjustment process and/or during the grinding process according to step d). The polyvalent cations may also be produced in-situ, e.g., by addition of an acid or acidic reacting salt. The polyvalent cations may be added instead of monovalent cations or in combination with monovalent cations.

According to one embodiment, the carboxylic groups of the at least one modified polysaccharide are at least partly neutralized by adding to the aqueous mineral pigment material suspension prior or during the grinding step d) one or more polyvalent cations. Preferably, the multivalent cations are selected from Sr²⁺, Ca²⁺, or Mg²⁺, and most preferably from Ca²⁺ added in form of Ca(OH)₂ in suspension and/or solution.

The polyvalent cations can be added in an amount corresponding to 0.1 to 5 wt.-%, preferably 2 to 3 wt.-%, based on the total weight of the dry partially or fully neutralized salt of CMC. Ca(OH)₂ may be added in amount from 50 to 500 ppm, based on the total weight of the dry pigment solids in the aqueous mineral material suspension, preferably in an amount from 200 to 300 ppm.

The polyvalent cations may be added in the form of an aqueous solution, suspension or powder, and preferably in the form of a suspension.

According to another embodiment of the present invention, the carboxylic groups of the at least one modified polysaccharide are at least partly neutralized by adding to the aqueous mineral pigment material suspension prior or during the grinding step d) one or more polyvalent cations, *in situ* formed, by adding an acid or acidic reacting salt. Preferably, the acid is H₃PO₄ or an acidic reacting salt thereof such as Na₂HPO₄, preferably CaHPO₄.

The H₃PO₄ or acidic reacting salt thereof may be added in amount from 50 to 500 ppm, based on the total weight of the dry pigment solids in the aqueous mineral material suspension, preferably in an amount from 200 to 400 ppm, in the form of an aqueous solution or suspension.

According to one exemplary embodiment of the present invention, the carboxylic groups of the at least one modified polysaccharide are at least partly neutralized by adding to the aqueous mineral pigment material suspension prior or during the grinding step d) a combination of one or more polyvalent cations and one or more monovalent cations, wherein the polyvalent cations preferably are selected from Sr²⁺, Ca²⁺, or Mg²⁺, and most preferably from Ca²⁺ added in form of Ca(OH)₂ in suspension and/or solution, and wherein the monovalent cations preferably are selected from Li⁺, Na⁺, or K⁺.

### Step d)

In step d) of the process according to the present invention, the aqueous mineral material suspension of step c) is ground until the fraction of self-binding pigment particles having a particle size of less than 1 µm is greater than 5 wt.-%.

According to one embodiment, the aqueous environment of the suspension to be ground has a pH from 7 to 12, preferably from 8 to 11, and more preferably from 8.5 to 10.5.

The grinding process may be undertaken by all the techniques and grinders well known to the man skilled in the art for wet grinding. The grinding step may be carried out with any conventional grinding device, for example, under conditions such that refinement predominantly results from impacts with a secondary body, i.e. in one or more of: a ball mill, a rod mill, a vibrating mill, a centrifugal impact mill, a vertical bead mill, an attrition mill, or other such equipment known to the skilled person. The grinding step d) may be carried out in batch or continuously, preferably continuously.

According to one embodiment of the present invention, the grinding step d) is carried out at a temperature from 30 to 110°C, preferably from 55 to 105°C.

According to one embodiment of the present invention, the inventive process does not involve the use or addition of a dispersing agent during the grinding.

According to another embodiment of the present invention, a dispersing agent is added before, during, or after process steps c) and/or d).

According to still another, optional embodiment of the present invention, a crosslinker for carboxyl and hydroxyl groups such as ammonium zirconium carbonate is added before, during, or after process steps c) and/or d).

According to one embodiment, the process of the invention may lead directly to a high solids suspension of self-binding pigment particles. Indeed, the process of the invention makes it possible to avoid a mandatory concentration step.

According to a second aspect, the present invention refers to a self-binding pigment particle suspension which is obtainable by the process according to the present invention. Such suspension contains a high solids content of self-binding mineral pigment particles, and preferably is free of stabilizing and/or dispersing agents.

The self-binding pigment particles obtained by the inventive process may have a *d₅₀* value from 0.05 to 15 µm, from 0.1 to 10 µm, from 0.5 to 5, or from 0.4 to 2 µm. The d₅₀ value is determined using a Sedigraph 5100 for the *d*₅₀ value between 2 to 0.4 µm and Malvern Laser Mastersizer for the *d*₅₀ value between 2 and 15 µm and *d* ₅₀ value between 0.05 and 0.4 µm.

According to one embodiment of the present invention, the grinding step d) is carried out until the fraction of self-binding pigment particles having a particle size of less than 1 µm is greater than 20 wt.-%, preferably greater than 60 wt.-%, more preferably greater than 75 wt.-%, and most preferably greater than 85 wt.-%, based on the total weight of the pigment particles, as measured with a Sedigraph 5100.

The improved mechanical properties reflected by a very good adhesion of the binder to the surface of the mineral particles allow for the use of the inventive self-binding pigment particles in several applications, e.g., paint applications. Also the good cohesion properties (binding effect between particles) provides beneficial properties in such applications.

According to one embodiment of the present invention the self-binding pigment particle suspension obtainable by the inventive process is used in paper, plastics, paint, concrete and/or agriculture applications. According to an exemplary embodiment of the present invention, the self-binding particle suspension obtainable by the inventive process is used in paper, e.g., in wet end process of a paper machine, preferably in cigarette paper and/or coating applications, or preferably as support for rotogravure and/or offset and/or digital printing. Another application is the coating of tree leaves and/or plant leaves to reduce sun light and UV exposure of the leave surface.

It is to be understood that the advantageous embodiments described above with respect to the inventive method for making self-binding pigment particles also can be used for preparing or defining the inventive suspension and its use. In other words, the preferred embodiments described above and any combinations of these embodiments can also be applied to the inventive suspension and its use.

The scope and interest of the invention will be better understood based on the following examples which are intended to illustrate certain embodiments of the invention and are non-limitative.

### EXAMPLES

### Methods and Materials

In the following, materials and measurement methods implemented in the examples are described.

### Brookfield viscosity

The Brookfield viscosity of the self-binding pigment particles suspension was measured after one hour of production and after one minute of stirring at room temperature at 100 rpm by the use of a Brookfield viscometer type RVT equipped with an appropriate spindle.

### Particle Size

The particle distribution of the self-binding pigment particles was measured using a Sedigraph 5100 from the company Micromeritics, USA. The method and the instrument are known to the skilled person and are commonly used to determine grain size of fillers and pigments. The measurement was carried out in an aqueous solution comprising 0.1 wt.-% Na₄P₂O₇ The samples were dispersed using a high speed stirrer and supersonics.

### Solids content of an aqueous suspension

The suspension solids content (also known as "dry weight") was determined using a Moisture Analyser HR73 from the company Mettler-Toledo, Switzerland, with the following settings: temperature of 120°C, automatic switch off 3, standard drying, 5 to 20 g of suspension.

### Adhesion test

The adhesion test was carried out by determining the force necessary to separate a coating layer from a support. The ground suspensions were coated on a plastic support (PP foils) at a range of different coat weight using a laboratory coater Typ Model 624 from the company Erichsen, Germany. Polypropylene foils (YUPO Synteap foils) used in the adhesion test were obtained from the company Fischer Papier AG, Switzerland. The thickness of the white semi-matt foils was 80 µm. The coated plastic foils were dried to a moisture content below 15 wt.-%. The adhesion was measured at an altitude of 500 m over sea level at 25°C and 50% relative humidity as follows:

20 mm of an adhesive-tape-strip (length around 30 mm, width 19 mm, scotch magic 3M 810 produced by 3M) was stuck to the coated foil. The protruding end was attached to a spring balance (precision balance, type 20100 by Pesola, measurement range 0 to 100 g). After gluing the coated foil to the ground, the spring balance was pulled vertically (angle of 90°) to the ground at a speed of around 30 cm/min wherein the deviation, i.e. the extension of the spring was measured. Adhesion of the coating to the PP-foil was determined by the weight required to induce a removal/debonding of the coating from the PP-foil. Values of greater than 100 g indicate that the coating did not de-bond during the measurement.

### Cohesion measurement

Cohesion measurement was carried out to determine the force necessary to separate pigment particles from each other. In order to study the self-binding character of the obtained pigment particles, tablets were prepared using a membrane filtration process. A high-pressure filter press type was used, manufactured from a hollow steel tube. Said tube was closable at the top by a lid having a pressure tube entry and contained the filtration membrane at the bottom. A volume of 50 to 80 ml of a slurry was then introduced, wherein the slurry was either a suspension containing only the inorganic matter (which is used to manufacture the reference samples), or a suspension containing the self-binding particles according to the invention (which is used to manufacture the samples for testing). Upon closing the lid, a constant pressure of 15 bar was then applied via the pressure tube to eliminate the water until a 20 mm thick tablet was obtained. The obtained tablet was air-dried for 1 week. A detailed description of the device and method used can be found in "Modified calcium carbonate coatings with rapid absorption and extensive liquid update capacity" (Colloids and Surfaces A, 236 (1-3), 2003, pp. 91-102).

The quasi-cylindrical solid blocks of pigment particles were ground using a disk mill (Jean Wirtz, Phoenix 4000) into disk-shaped samples having a diameter of 25 mm and a thickness of approximate 15 mm. A detailed description of this procedure can be found in "Fluid transport into porous coating structures: some novel findings" (Tappi Journal, 83 (5), 2000, pp. 77-78).

The obtained samples underwent a crush resistance test on a Zwick-Roell tension machine with a WN158988 control unit, using a rod/flat system (with a hemispherical end). The force of the cell was 20 kN. The samples were crushed at a speed of 3 mm/min over a length of 10 mm. The values of the force for a deformation of 2 mm were determined.

### Intrinsic viscosity

The intrinsic viscosity was determined by a Schott AVS 370 system. The samples were dissolved in a 0.2 M NaCl solution, and subsequently, the pH was adjusted to 10 with NaOH. Measurements were performed at 25°C with a capillary type 0a and corrected using the Hagenbach correction.

### Degree of carboxylation

The degree of carboxylation was determined by conductometric titration according to Katz et al. "The determination of strong and weak acidic groups in sulfite pulps" (Svensk Paperstidn., 1984, 6, pp. 48-53).

### Cross cut test

The cross cut test was carried out in accordance with DIN EN ISO 2409:2007 using a NT cartridge-A cutter (blade thickness: 0.38 mm), wherein the distance between the cuts was 2 mm. The sample was prepared by coating a stone ware plate with a wet volumetric coating of 35 ml/m² and drying the same in a hot air stream at 150°C for 15 min.

### Whiteness (R457) and yellowness indix measurement

Whiteness and yellowness index was determined according to norm TAPPI T452 ISO 247. Glossiness was determined according to DIN 54 502 / TAPPI 75.

### Nuclear carbon transformation from ¹⁴C to ¹⁴N

The rate of nuclear carbon transformation from ¹⁴C to ¹⁴N of binders was measured, based on a stage of preparation consisting of a thermal decomposition at a high temperature (approximately 1000°C) by combustion or calcination of the sample for analysis, followed by collection of the released carbon dioxide which is trapped at low temperature before its reduction, by catalytic hydrogenation, into elemental carbon atoms, the composition of which in ¹³C/¹²C and ¹⁵N/¹⁴N isotopes, and also ¹⁴C isotopes, were measured by a mass spectrophotometer.

The rate of nuclear carbon transformation from ¹⁴C to ¹⁴N of binders was determined after grinding the binder pigment hybrid by diluting the ground suspension with water to 1 wt.-%, filtering the diluted suspension at 50 to 500 mbar, using 0.2 µ membrane filters, drying the clear solution after filtering at 120°C to < 1 wt.-% moisture, and measuring the sample as described above using accelerator mass spectrometry (AMS) at the Radiocarbon Laboratory at the University of Zurich.

### Preparation of a mineral slurry and grinding

Dry ground calcium carbonate blend, having a *d*₉₀ of 390 µm a *d*₅₀ of 165 µm, a *d*₁₀ of 20 µm (determined by screening) was wet ground to a *d*₅₀ of approximately of 0.7 µm. The wet grinding was done in tap water (15° dH) in a vertical attritor mill (Dynomill^{®}, Bachofen, Switzerland) having a volume of 1.5 litres in a recirculation mode, using zircon silicate beads of 0.6 to 1.2 mm diameter.

### Example 1- Comparative Example

A natural CaCO₃ from Italy, Avenza, was employed as mineral pigment material, and a commercially available carboxymethyl cellulose (CMC) (from ACROS Organics) was employed as polymeric binder. The CMC used had an M_{w} of 250000 g/mol, a carboxylation degree of 1.2, and an intrinsic viscosity of 774 ml/g.

A slurry with a solid content of 45 wt.-% was prepared by adding 2 wt.-% of the CMC in form of a 9.9 wt.-% solution in water to the mineral pigment material suspension and wet grinding the mixture until a *d*₉₈ of 3 µm was achieved.

The particle size distribution, measured on a Sedigraph 5100, had a fraction of 92 wt.-% smaller than 2 µm and 64 wt-% smaller than 1 µm. During the grinding process, the Brookfield viscosity increased to such an extent so that no further grinding at the high solids content concentration was possible. The slurry was diluted with water to keep grinding running. The obtained pigment particle suspension had a solid content of 40.5 wt.-% and a Brookfield viscosity of 485 mPas.

### Example 2 - Comparative Example

A natural CaCO₃ from Norway having a fineness corresponding to a *d*₅₀ value of 42 to 48 µm was employed as mineral pigment material, and a commercially available sodium/magnesium-neutralized polyacrylate having an M_{w} of 6000 g/mol and a Mₙ of 2300 g/mol was employed as polymeric binder.

A slurry with a solid content of 77.5 wt-% was prepared by adding 0.65 wt.-% of the sodium/magnesium-neutralized polyacrylate to the mineral pigment material suspension and wet grinding the mixture in a 1.4-litre vertical atritor mill by recirculation until a *d*₅₀ value of 0.8 µm was achieved.

The particle size distribution, measured on a Sedigraph 5100, had a fraction of 90 wt.-% smaller than 2 µm, 65 wt.-% smaller than 1 µm, and 15 wt.-% smaller than 0.2 µm.

The adhesion test revealed that a coating of the obtained product was released from or ripped off the foil at less than 10 g.

The cohesion test provided a tablet breaking strength of 256 N ± 100.

### Example 3

### Preparation of carboxymethylcellulose (CMC) binder

214 g commercially available CMC (from ACROS Organics) having an M_{w} of 250000 g/mol, a carboxylation degree of 1.2, and an intrinsic viscosity of 774 ml/g, was dissolved in 2460 ml water and stirred for 12 h at room temperature. Subsequently, the solution was heated to 80°C, and 800 µl of a 30 wt.-% H₂O₂ solution were added dropwise. After 5 h, 60 µl of said H₂O₂ solution were added dropwise. Thereafter, 2 times another 60 µl of said H₂O₂ solution were added dropwise in 1.5 h intervals. Finally, the solution was stirred for another 1.5 h at 80°C.

The obtained CMC binder had an intrinsic viscosity of 179 ml/g and a pH of 7.

### Preparation of self-binding pigment particles

A natural CaCO₃ from Italy, Avenza, was employed as mineral pigment material.

A slurry with a solid content of 60 wt.-% was prepared by adding 2 wt.-% of the prepared CMC binder in form of a 9.9 wt.-% solution in water to the mineral pigment material suspension and wet grinding the mixture at 55°C. Furthermore, 300 ppm of Ca(OH)₂ were added during grinding. The grinding was carried out for 25 min until a *d* ₉₈ of 3 µm was achieved.

The particle size distribution, measured on a Sedigraph 5100, had a fraction of 91 wt.-% smaller than 2 µm and 61 wt.-% smaller than 1 um The obtained pigment particle suspension had a solid content of 60.8 wt.-%, a pH of 9.4, and a Brookfield viscosity of 922 mPas.

### Adhesion, cohesion and cross-cut tests

The adhesion test was carried out with coating weights of 5 g/m², 21 g/m², and 47 g/m². The coatings did not release or rip off the foil (de-bond) even when pulling with a balance force of 100 g.

The cohesion test provided a tablet breaking strength of 1583 N. This test has been reproduced three times with a deviation of ± 250 N.

The cross-cut test was carried out on stone ware plate (unglazed, size: 15x15 cm², "Villeroy & Boch", Germany). Table 1 show the results obtained for the self-binding pigment particles obtained by the inventive process and pigment particles of the prior art. A photograph of the result obtained for the comparative example 2 is shown in Fig. 1 and a photograph of the result obtained for self-binding particles of example 3 is shown in Fig. 2.

**Table 1**

| Sample | Cross-cut test (EN ISO 2409:2007) (Grading ISO) |
|---|---|
| Pigment example 2 (comparative) | GT 5 |
| Pigment example 3 | GT 2 |

According to EN ISO 2409:2007 the grading GT 2 means that the coating is chipped off along the edges of the cut and/or at the intersections of the grid lines, and the chipped off surface is about 15% of the sections. GT5 refers to each degree of flaken that cannot be even classified by GT 4, wherein GT 4 is used when the coating is chipped off along edges of the cut in broad strips and/or of individual sections totally or partly, and the chipped region of surface is about 65% of the sections.

The results compiled in table 1 show that the inventive product of example 3 leads to an improved adhesion on totally different supports such as plastic or stone ware compared to the product of comparative example 2.

### Example 4

### Preparation of self-binding pigment particles

A natural CaCO₃ from Italy, Avenza, was employed as mineral pigment material.

A slurry with a solid content of 60 wt.-% was prepared by adding 2 wt.-% of a CMC binder prepared according Example 3 in form of a 9.9 wt.-% solution in water to the mineral pigment material suspension. Furthermore, 300 ppm of Ca(OH)₂ and 500 ppm ammonium zirconium carbonate (Bacote 20, MEL Chemicals) were added during grinding. The grinding was carried out for 25 min until a d₉₈ of 3 µm was achieved.

The particle size distribution, measured on a Sedigraph 5100, had a fraction of 91 wt.-% smaller than 2 µm and 61 wt.-% smaller than 1 µm The obtained pigment particle suspension had a solid content of 61 wt.-%, a pH of 9.5, and a Brookfield viscosity of 940 mPas.

### Coating on wood

A balsa wood plate (ex Costa Rica) was coated with the self binding pigment prepared above. The wet volumetric coating was 35 ml/m² and the wood sample was dried in a hot air stream at 150°C.

### Adhesion Test

The coatings did not release or rip off (de-bond from) the wood support even pulling with a balance force of 100 g.

### Optical properties

**Table 2**

| Sample | Whitness (R457) | Yellowness index |
|---|---|---|
| Uncoated wood | 46.8 | 34.9 |
| Coated wood | 82.1 | 3.4 |

The results compiled in table 2 show that the inventive self-binding pigment prepared in example 4 can be used to modify the optical surface properties of a wood surface.

### Example 5

### Preparation of self-binding pigment particles

A natural CaCO₃ from Italy, Avenza, was employed as mineral pigment material.

A slurry with a solid content of 50 wt.-% was prepared by adding 0.72 wt.-% of a CMC binder prepared according Example 3 in form of a 9.6 wt.-% solution in water to the mineral pigment material suspension. Additionally, 1.28 wt.-% of a commercially available CMC (from ACROS Organics) having an M_{w} of 250000 g/mol, a carboxylation degree of 1.2, and an intrinsic viscosity of 774 ml/g, was added in form of a 9.9 wt.-% solution in water. Furthermore, 300 ppm of Ca(OH)₂ was added during grinding. The grinding was carried out for 25 min at 50°C until a d₉₈ of 3 µm was achieved.

The particle size distribution, measured on a Sedigraph 5100, had a fraction of 89 wt.-% smaller than 2 µm and 60 wt.-% smaller than 1 µm. The obtained pigment particle suspension had a solid content of 51.5 wt.-%, a pH of 9.2, and a Brookfield viscosity of 954 mPas.

### Adhesion and cohesion test

The adhesion test was carried out with coating weights of 7 g/m², 15 g/m², and 40 g/m². The coatings did not release or rip off (de-bond from) the foil even when pulling with a balance force of 100 g.

The cohesion test provided a tablet breaking strength of 1659 N.

The obtained results for comparative examples 1 and 2 as well as for examples 3 and 5 are summarized in Table 3 below.

**Table 3**

| | solids content [wt.-%] | binder [wt.-%] | Ca(OH)₂ [ppm] | Brookfield viscosity [mPas] | cohesion [N] |
|---|---|---|---|---|---|
| Example 1 (comparative) | 40.5 | 2.00 wt.-% CMC (commercial) | | > 2000 | |
| Example 2 (comparative) | 77.5 | 0.65 wt.-% sodium/magnesiu m polyacrylate | | | 256 ±100 |
| Example 3 | 60.0 | 2.00 wt.-% CMC (inventive) | 300 | 922 | 1583±250 |
| Example 5 | 50.0 | Blend of 0.72 wt.-% CMC (inventive) and 1.28 wt.-% CMC (commercial) | 300 | 954 | 1659 |

A clear advantageous effect can be gathered from the results shown in table 3 since a reduced viscosity in combination with increased solid content is observed. Contrary to comparative example 1, in examples 3 and 5, the grinding of the slurry is still possible even at higher solid contents. Comparative example 2 shows the use of polyacrylate instead of CMC. Polyacrylate is known to a person skilled in the art as a polymer which allows for grinding at high solids content. However, it does not provide the desired cohesion and adhesion properties. As can be seen in table 3, the cohesion measurements merely indicate values of 265 N for comparative example 2 but 1583 N for example 3 and 1659 N for example 5. Therefore, the inventive CMC provides much better results than comparative example 2.

### Example 6

### Preparation of carboxymethylcellulose (CMC) binder

90.8 g commercially available CMC (from ACROS Organics) having an M_{w} of 250000 g/mol, a carboxylation degree of 1.2, and an intrinsic viscosity of 774 ml/g, was dissolved in 1 170 ml water and stirred for 12 hat room temperature. Subsequently, the solution was heated to 80°C, and 0.9 ml of a 30 wt.-% H₂O₂ solution were added dropwise. After 5.5 h, 0.5 ml of said H₂O₂ solution were added dropwise. After 4 h, another 0.2 ml of said H₂O₂ solution were added dropwise. Thereafter, the solution was stirred for 2 h and another 0.4 ml of said H₂O₂ solution were added drop wise. Finally, the solution was stirred for another 4 h at 80°C. The obtained CMC binder had an intrinsic viscosity of 56 ml/g and a pH of 10, adjusted with aqueous 10% NaOH.

### Preparation of self-binding pigment particles

A natural CaCO₃ from Norway obtained by first autogenously dry grinding 10 to 300 mm CaCO₃ rocks to a fineness corresponding to a *d*₅₀ value from 42 to 48 µm was employed as mineral pigment material.

A slurry with a solid content of 72.1 wt-% was prepared by adding 0.69 wt.-% of the prepared CMC and 300 ppm Ca(OH)₂ to the mineral pigment material suspension and wet grinding the mixture in a 1.4-litre vertical atritor mill by recirculation until a *d*₅₀ value of 0.8 µm was achieved.

The particle size distribution, measured on a Sedigraph 5100, had a fraction of 90 wt.-% smaller than 2 µm, 65 wt.-% smaller than 1 µm, and 15 wt-% smaller than 0.2 µm. The obtained pigment particle suspension had a solid content of 72.1 wt.-%, a pH of 9.6, and a Brookfield viscosity of 273 mPas.

### Adhesion test

The adhesion test was carried out with coating weights of 10 g/m², and 35 g/m². The coatings did not release or rip off (de-bond from) the foil even when pulling with a balance force of 100 g for a coating weight of 10 g/m², and the coatings did not release or rip off (de-bond from) the foil when pulling with a balance force of 35 g for a coating weight of 35 g/m².

### Example 7

### Preparation of carboxymethylcellulose (CMC) binder

124 g commercially available CMC (from ACROS Organics) having an M_{w} of 250000 g/mol, a carboxylation degree of 1.2, and an intrinsic viscosity of 774 ml/g, was dissolved in 1299 ml water and stirred for 12 h at room temperature. Subsequently, the solution was heated to 80°C, and 2 ml of a 30 wt.-% H₂O₂ solution were added dropwise over a period of 20 minutes. After 4.5 h, 1.2 ml of said H₂O₂ solution were added dropwise over a period of 20 minutes. After 2 h additional 0.8 ml of said H₂O₂ solution were added drop wise over a period of 20 minutes. Thereafter, the solution was stirred for 7 h at 80°C. After cooling down to room temperature, the obtained CMC binder had an intrinsic viscosity of 23.7 ml/g and a pH of 10, adjusted with aqueous 10% NaOH.

### Preparation of self-binding pigment particles

A natural CaCO₃ from Norway obtained by first autogenously dry grinding 10 to 300 mm CaCO₃ rocks to a fineness corresponding to a *d*₅₀ value from 42 to 48 µm was employed as mineral pigment material.

A slurry with a solid content of 73.8 wt-% was prepared by adding 0.58 wt.-% of the prepared CMC to the mineral pigment material suspension and wet grinding the mixture in a 1.4-litre vertical atritor mill by recirculation until a *d*₅₀ value of 0.8 µm was achieved.

The particle size distribution, measured on a Sedigraph 5100, had a fraction of 90 wt.-% smaller than 2 µm, 65 wt.-% smaller than 1 µm, and 15 wt-% smaller than 0.2 µm. The obtained pigment particle suspension had a solid content of 73.8 wt.-%, a pH of 8.4, and a Brookfield viscosity of 292 mPas.

### Adhesion test

The adhesion test was carried out with coating weights of 14 g/m². The coatings did not release or rip off (de-bond from) the foil until a balance force of 40 g.

### Example 8

### Preparation of carboxymethylcellulose (CMC) binder

93 g commercially available CMC (from ACROS Organics) having an M_{w} of 250000 g/mol, a carboxylation degree of 1.2, and an intrinsic viscosity of 774 ml/g, was dissolved in 2255 ml water and stirred for 12 h at room temperature. Subsequently, the solution was heated to 80°C, and 0.34 ml of a 30 wt.-% H₂O₂ solution were added dropwise over a period of 20 minutes. After 3 h, 27 µl of said H₂O₂ solution were added. Finally, the solution was stirred for 2.5 h at 80°C. The obtained CMC binder had an intrinsic viscosity of 178 ml/g and a pH of 10, adjusted with aqueous 10% NaOH after cooling to room temperature.

### Preparation of self-binding pigment particles

A natural CaCO₃ from Norway obtained by first autogenously dry grinding 10 to 300 mm CaCO₃ rocks to a fineness corresponding to a *d*₅₀ value from 42 to 48 µm was employed as mineral pigment material.

A slurry with a solid content of 68.2 wt-% was prepared by adding 0.93 wt.-% of the prepared CMC and 300 ppm Ca(OH)₂ to the mineral pigment material suspension and wet grinding the mixture in a 1.4-litre vertical atritor mill by recirculation until a *d* ₅₀ value of 0.8 µm was achieved.

The particle size distribution, measured on a Sedigraph 5100, had a fraction of 90 wt.-% smaller than 2 µm, 65 wt.-% smaller than 1 µm, and 15 wt-% smaller than 0.2 µm. The obtained pigment particle suspension had a solid content of 68.2 wt.-%, a pH of 9.5, and a Brookfield viscosity of 1016 mPas.

### Adhesion test

The adhesion test was carried out with coating weights of 7 g/m², 26 g/m², and 48 g/m². The coatings did not release or rip off the foil even when pulling with a balance force of 100 g for coating weights of 7 g/m² and 26 g/m². The coatings did not release or rip off (de-bond from) the foil until a balance force of 90 g for the coating weight of 48 g/m².

The obtained results for examples 6 to 8 are summarized in table 4 below.

**Table 4**

| | solids content [wt.-%] | CMC-binder [wt.-%] | Ca(OH)₂ [ppm] | Brookfield viscosity [mPas] |
|---|---|---|---|---|
| Example 6 | 72.1 | 0.69 | 300 | 273 |
| Example 7 | 73.8 | 0.58 | 0 | 292 |
| Example 8 | 68.2 | 0.93 | 300 | 1016 |

### Example 9

### Preparation of carboxymethylcellulose (CMC) binder

3.4 kg commercially available CMC (from ACROS Organics) having an M_{w} of 250000 g/mol, a carboxylation degree of 1.2, and an intrinsic viscosity of 774 ml/g, was dissolved in 40 L water and stirred for 24 h at room temperature. Subsequently, the solution was heated to 80°C, and 150 ml of a 30 wt.-% H₂O₂ solution were added dropwise over a period of 2 h. After 22 h, additional 20 ml H₂O₂ solution were added over a period of 2 h. Finally, the solution was stirred for 8 h at 80°C. The obtained CMC binder had an intrinsic viscosity of 28 ml/g and a pH of 10, adjusted with aqueous 10% NaOH after cooling to room temperature. The CMC solution was spray dried.

### Preparation of self-binding pigment particles

A natural CaCO₃ from Norway obtained by first autogenously dry grinding 10 to 300 mm CaCO₃ rocks to a fineness corresponding to a *d*₅₀ value from 42 to 48 µm was employed as mineral pigment material.

A slurry with a solid content of 76.1 wt-% was prepared by adding 0.73 wt.-% of the prepared CMC and 0.03 wt.-% H₃PO₄ to the mineral pigment material suspension and wet grinding the mixture in a 1.4-litre vertical atritor mill by recirculation at 60°C until a *d*₅₀ value of 0.8 µm was achieved.

The particle size distribution, measured on a Sedigraph 5100, had a fraction of 90 wt.-% smaller than 2 µm, 65 wt.-% smaller than 1 µm, and 15 wt-% smaller than 0.2 µm. The obtained pigment particle suspension had a solid content of 76.0 wt.-%, a pH of 8.7, and a Brookfield viscosity of 482 mPas.

### Adhesion test

The adhesion test was carried out with coating weights of 15 g/m². The coatings did not release or rip off (de-bond from) the foil even when pulling with a balance force of 100 g.

### Optical properties

**Table 5**

| Sample | Gloss (Tappi 75) [%] |
|---|---|
| Uncoated polypropylene foil (YUPO Synteape foils) | 15.5 |
| Polypropylene foil (YUPO Synteape foils) coated with 15 g/m² of a slurry of self-binding pigment particles of example 9 | 73.1 |

The obtained results of the adhesion test for examples 2, 3, and 5 to 8 are summarized in table 6 below.

**Table 6**

| | Coating weight [g/m²] | applied weight [g] | observations | Mechanical Properties |
|---|---|---|---|---|
| Example 2 (comparative) | - | <10 | coating peels off | - |
| Example 3 | 5 | > 100 | no peel off | + |
| | 21 | > 100 | no peel off | + |
| | 47 | > 100 | no peel off | + |
| Example 5 | 7 | > 100 | no peel off | + |
| | 15 | > 100 | no peel off | + |
| | 40 | > 100 | no peel off | + |
| Example 6 | 10 | 100 | no peel off | + |
| | 35 | 35 | no peel off | + |
| Example 7 | 14 | 40 | no peel off | + |
| Example 8 | 7 | > 100 | no peel off | + |
| | 26 | > 100 | no peel off | + |
| | 48 | 90 | no peel off | + |

Measurements of the adhesion and the mechanical properties were done after drying the coating layer. As can be gathered from table 6, the coatings of the inventive self-binding pigment particles did not rip off or peel off even at higher weights or stronger bending. A peeling off was only observed for the coating of comparative example 2.

## Claims

1. Process for preparing self-binding pigment particles comprising the following steps:
a) providing an aqueous mineral pigment material suspension;
b) providing at least one polymeric binder, wherein the binder comprises at least one modified polysaccharide having a degree of carboxylation in the range of 0.4 to 2.0 and having an intrinsic viscosity in the range of 3 to 300 ml/g,
wherein the carbon of the binder shows a rate of nuclear transformation of ¹⁴C to ¹⁴N of between 900 and 920 transformations per hour and per gram carbon in the binder;
c) mixing the binder of step b) with the aqueous mineral pigment material suspension of step a) and adjusting the solids content of the obtained suspension so that it is from 45 to 80 wt.-%, based on the total weight of the suspension;
d) grinding the aqueous mineral material suspension of step c) until the fraction of self-binding pigment particles having a particle size of less than 1 µm is greater than 5 wt.-%, based on the total weight of the pigment particles,
wherein in step c) the binder is added to the aqueous mineral pigment suspension in an amount from 0.1 to 10.0 wt.-%, based on the total weight of the suspension.

2. Process according to claim 1, wherein the at least one modified polysaccharide is carboxymethylcellulose.

3. The process according to claim 1 or 2, wherein in step c) the binder is added to the aqueous mineral pigment suspension in an amount from 0.2 to 5 wt.-%, preferably 0.25 to 3.0 wt.-%, based on the total weight of the suspension.

4. The process according to any one claims 1 to 3, wherein the binder is in form of a solution or a dry material, preferably in form of an aqueous solution having a binder concentration from 1 to 70 wt.-%, preferably from 2 to 55 wt.-%, more preferably from 5 to 50 wt.-%, and most preferably from 30 to 50 wt.-%, based on the total weight of the solution.

5. The process according to any one of claims 1 to 4, wherein the binder only consists of at least one modified polysaccharide, preferably carboxymethylcellulose.

6. The process according to any one of claims 1 to 5, wherein the binder is composed of a mixture of two or more types of modified polysaccharide, wherein at least one has a degree of carboxylation in the range of 0.4 to 2.0 and an intrinsic viscosity in the range of 3 to 300 ml/g.

7. The process according to any one of claims 1 to 6, wherein the solids content is adjusted so that it is from 50 to 80 wt.-%, more preferably to 60 to 79 wt.-%, most preferably to 65 to 78 wt.-%, based on the total weight of the suspension.

8. The process according to any one of claims 1 to 7, wherein the carboxylic groups of the at least one modified polysaccharide are at least partly neutralized by adding to the aqueous mineral pigment material suspension prior or during the grinding step d) one or more polyvalent cations, wherein the polyvalent cations preferably are selected from Sr²⁺, Ca²⁺, or Mg²⁺, and most preferably from Ca²⁺ added in form of Ca(OH)₂ in suspension and/or solution.

9. The process according to any one of claims 1 to 7, wherein the carboxylic groups of the at least one modified polysaccharide are at least partly neutralized by adding to the aqueous mineral pigment material suspension prior or during the grinding step d) one or more polyvalent cations, *in situ* formed, by adding an acid, preferably H₃PO₄, or acidic reacting salt such as Na₂HPO₄, preferably CaHPO₄.

10. The process according to any one of claims 1 to 7, wherein the carboxylic groups of the at least one modified polysaccharide are at least partly neutralized by adding to the aqueous mineral pigment material suspension prior or during the grinding step d) one or more monovalent cations, wherein the monovalent cations preferably are selected from Li⁺, Na⁺, or K⁺.

11. The process according any one of claims 1 to 7, wherein the carboxylic groups of the at least one modified polysaccharide are at least partly neutralized by adding to the aqueous mineral pigment material suspension prior or during the grinding step d) a combination of one or more polyvalent cations and one or more monovalent cations, wherein the polyvalent cations preferably are selected from Sr²⁺, Ca²⁺, or Mg²⁺, and most preferably from Ca²⁺ added in form of Ca(OH)₂ in suspension and/or solution, and wherein the monovalent cations preferably are selected from Li⁺, Na⁺, or K⁺.

12. The process according to any one of claims 1 to 11, wherein the grinding step d) is carried out until the fraction of self-binding pigment particles having a particle size of less than 1 µm is greater than 20 wt.-%, preferably greater than 60 wt.-%, more preferably greater than 75 wt.-%, and most preferably greater than 85 wt.-%, based on the total weight of the pigment particles.

13. The process according to any one of claims 1 to 12, wherein before or during or after steps c) and/or d) a dispersing agent is added.

14. The process according to any one of claims 1 to 13, wherein said mineral pigment material is selected from calcium carbonate, calcium carbonate containing minerals, mixed carbonate based fillers, or mixtures thereof, and wherein the calcium carbonate containing minerals preferably comprise dolomite, and the mixed carbonate based fillers are preferably selected from calcium associated with magnesium, clay, talc, talc-calcium carbonate mixtures, calcium carbonate-kaolin mixtures, or mixtures of natural calcium carbonate with aluminium hydroxide, mica or with synthetic or natural fibers or co-structures of minerals, preferably talc-calcium carbonate or talc-titanium dioxide or calcium carbonate-titanium dioxide co-structures.

15. The process according to claim 14, wherein the calcium carbonate is a ground natural calcium carbonate, a precipitated calcium carbonate, a modified calcium carbonate, or a mixture thereof.

16. The process according to any one of claims 1 to 15, wherein the degree of carboxylation of the at least one modified polysaccharide is in the range of 0.4 to 2.0, 0.5 to 1.8, 0.6 to 1.6, or 0.7 to 1.5.

17. The process according to any one of claims 1 to 16, wherein the intrinsic viscosity of the at least one modified polysaccharide is in the range of 5 to 250 ml/g, preferably 5 to 220 ml/g, and more preferably of 10 to 200 ml/g.

18. The process according to any one of claims 1 to 17, wherein the at least one modified polysaccharide has a degree of carboxylation of 1 or more, and an intrinsic viscosity in the range of 5 to 250 ml/g, preferably 5 to 150 ml/g, and more preferably 10 to 100 ml/g.

19. The process according to any one of claims 1 to 17, wherein the at least one modified polysaccharide has a carboxylation degree of less than 1, and an intrinsic viscosity in the range of 5 to 70 ml/g, preferably 5 to 50 ml/g, and more preferably 10 to 30 ml/g.

20. The process according to any one of claims 1 to 19, wherein intrinsic viscosity of the modified polysaccharide provided in step b) is adjusted by addition of at least hydrogen peroxide, optionally in presence of an alkali peroxide, in two to five steps.

21. The process according to any one of claims 1 to 20, wherein the grinding step d) is carried out at a temperature from 30 to 110°C, preferably from 55 to 105°C.

22. The process according to any one of claims 1 to 21, wherein the grinding step d) is carried out in batch or continuously, preferably continuously.

23. Self-binding pigment particle suspension, obtainable by the process of any one of claims 1 to 22.

24. Use of the self-binding pigment particle suspension of claim 23 in paper, plastics, paint, concrete and/or agriculture applications.

25. The use according to claim 24, wherein the self-binding pigment particle suspension is used in wet end process of a paper machine, in cigarette paper and/or coating applications, or as a support for rotogravure and/or offset and/or digital printing.

26. The use according to claim 24, wherein the self-binding pigment particle suspension is used to reduce sun light and UV exposure of plant leaves.

## Patentansprüche

1. Verfahren zur Herstellung von selbstbindenden Pigmentpartikeln, umfassend die folgenden Schritte:
a) Bereitstellen einer wässrigen Mineralpigmentmaterialsuspension;
b) Bereitstellen wenigstens eines polymeren Bindemittels, wobei das Bindemittel wenigstens ein modifiziertes Polysaccharid mit einem Carboxylierungsgrad im Bereich von 0,4 bis 2,0 und einer intrinsischen Viskosität im Bereich von 3 bis 300 ml/g umfasst, wobei der Kohlenstoff des Bindemittels eine Kemumwandlungsrate von ¹⁴C zu ¹⁴N von zwischen 900 und 920 Umwandlungen pro Stunde und pro Gramm Kohlenstoff in dem Bindemittel zeigt;
c) Vermischen des Bindemittels aus Schritt b) mit der wässrigen Mineralpigmentmaterialsuspension aus Schritt a) und Einstellen des Feststoffgehalts der erhaltenen Suspension, so dass er von 45 bis 80 Gew.-% ausmacht, bezogen auf das Gesamtgewicht der Suspension;
d) Vermahlen der wässrigen Mineralmaterialsuspension aus Schritt c) bis die Fraktion an selbstbindenden Pigmentpartikeln mit einer Partikelgrösse von kleiner 1 µm grösser 5 Gew.-% beträgt, bezogen auf das Gesamtgewicht der Pigmentpartikel,
wobei in Schritt c) das Bindemittel zu der wässrigen Mineralpigmentsuspension in einer Menge von 0,1 bis 10,0 Gew.-% zugegeben wird, bezogen auf das Gesamtgewicht der Suspension.

2. Verfahren nach Anspruch 1, bei dem das wenigstens eine modifizierte Polysaccharid Carboxymethylcellulose ist.

3. Verfahren nach Anspruch 1 oder 2, bei dem in Schritt c) das Bindemittel zu der wässrigen Mineralpigmentsuspension in einer Menge von 0,2 bis 5 Gew.-% zugegeben wird, bevorzugt 0,25 bis 3,0 Gew.-%, bezogen auf das Gesamtgewicht der Suspension.

4. Verfahren nach einem der Ansprüche 1 bis 3, bei dem das Bindemittel in der Form einer Lösung oder eines trockenen Materials ist, bevorzugt in der Form einer wässrigen Lösung mit einer Bindemittelkonzentration von 1 bis 70 Gew.-%, bevorzugt von 2 bis 55 Gew.-%, bevorzugter von 5 bis 50 Gew.-%, und am meisten bevorzugt von 30 bis 50 Gew.-%, bezogen auf das Gesamtgewicht der Lösung.

5. Verfahren nach einem der Ansprüche 1 bis 4, bei dem das Bindemittel nur aus wenigstens einem modifizierten Polysaccharid, bevorzugt Carboxmethylcellulose, besteht.

6. Verfahren nach einem der Ansprüche 1 bis 5, bei dem das Bindemittel aus einem Gemisch von zwei oder mehreren Typen von modifizierten Polysacchariden besteht, wobei wenigstens eines einen Carboxylierungsgrad im Bereich von 0,4 bis 2,0 und eine intrinsische Viskosität im Bereich von 3 bis 300 ml/g aufweist.

7. Verfahren nach einem der Ansprüche 1 bis 6, bei dem der Feststoffgehalt so eingestellt ist, dass er von 50 bis 80 Gew.-% ausmacht, bevorzugter 60 bis 79 Gew.-%, am meisten bevorzugt von 65 bis 78 Gew.-%, bezogen auf das Gesamtgewicht der Suspension.

8. Verfahren nach einem der Ansprüche 1 bis 7, bei dem die Carbonsäuregruppen des wenigstens einen modifizierten Polysaccharids wenigstens teilweise neutralisiert sind durch die Zugabe von einem oder mehreren polyvalenten Kationen zu der wässrigen Mineralpigmentmaterialsuspension vor oder während dem Mahlschritt d), wobei die polyvalenten Kationen bevorzugt ausgewählt sind aus Sr²⁺, Ca²⁺ oder Mg²⁺, und am meisten bevorzugt aus Ca²⁺, das in der Form von Ca(OH)₂ in Suspension und/oder Lösung zugegeben wird.

9. Verfahren nach einem der Ansprüche 1 bis 7, bei dem die Carbonsäuregruppen des wenigstens einen modifizierten Polysaccharids wenigstens teilweise neutralisiert sind durch die Zugabe von einem oder mehreren polyvalenten Kationen, in situ gebildet durch die Zugabe einer Säure, bevorzugt H₃PO₄, oder einem sauer reagierenden Salz, wie Na₂HPO₄, bevorzugt CaHPO₄, zu der wässrigen Mineralpigmentmaterialsuspension vor oder während dem Mahlschritt d).

10. Verfahren nach einem der Ansprüche 1 bis 7, bei dem die Carbonsäuregruppen des wenigstens einen modifizierten Polysaccharids wenigstens teilweise neutralisiert sind durch die Zugabe von einem oder mehreren monovalenten Kationen zu der wässrigen Mineralpigmentmaterialsuspension vor oder während dem Mahlschritt d), wobei die monovalenten Kationen bevorzugt ausgewählt sind aus Li⁺, Na⁺ oder K⁺.

11. Verfahren nach einem der Ansprüche 1 bis 7, bei dem die Carbonsäuregruppen des wenigstens einen modifizierten Polysaccharids wenigstens teilweise neutralisiert sind durch die Zugabe von einer Kombination von einem oder mehreren polyvalenten Kationen und einem oder mehreren monovalenten Kationen zu der wässrigen Mineralpigmentmaterialsuspension vor oder während dem Mahlschritt d), wobei die polyvalenten Kationen bevorzugt ausgewählt sind aus Sr²⁺, Ca²⁺ oder Mg²⁺, und am meisten bevorzugt aus Ca²⁺, das in der Form von Ca(OH)₂ in Suspension und/oder Lösung zugegeben wird, und wobei die monovalenten Kationen bevorzugt ausgewählt sind aus Ll⁺, Na⁺ oder K⁺.

12. Verfahren nach einem der Ansprüche 1 bis 11, bei dem der Mahlschritt d) ausgeführt wird, bis die Fraktion an selbstbindenden Pigmentpartikeln mit einer Partikelgrösse von kleiner 1 µm grösser 20 Gew.-% beträgt, bevorzugt grösser 60 Gew.-%, bevorzugter grösser 75 Gew.-%, und am meisten bevorzugt grösser 85 Gew.-%, bezogen auf das Gesamtgewicht der Pigmentpartikel.

13. Verfahren nach einem der Ansprüche 1 bis 12, bei dem vor oder während oder nach den Schritten c) und/oder d) ein Dispergierungsmittel zugegeben wird.

14. Verfahren nach einem der Ansprüche 1 bis 13, bei dem das Mineralpigmentmaterial ausgewählt ist aus Calciumcarbonat, Calciumcarbonat enthaltenden Mineralien, Füllstoffen auf Basis von Mischcarbonaten, oder Gemischen davon, und wobei die Calciumcarbonat enthaltenden Mineralien bevorzugt Dolomit umfassen, und die Füllstoffe auf Basis von Mischcarbonaten sind bevorzugt ausgewählt aus Calcium assoziiert mit Magnesium, Lehm, Talk, Talk-Calciumcarbonat-Gemischen, Calciumcarbonat-Kaolin-Gemischen, oder Gemischen aus natürlichem Calciumcarbonat mit Aluminiumhydroxid, Glimmer oder mit synthetischen oder natürlichen Fasern oder Co-Strukturen von Mineralien, bevorzugt Talk-Calciumcarbonat- oder Talk-Titandioxid- oder Calciumcarbonat-Titandioxid-Co-Strukturen.

15. Verfahren nach Anspruch 14, bei dem das Calciumcarbonat ein vermahlenes, natürliches Calciumcarbonat, ein gefälltes Calciumcarbonat, ein modifiziertes Calciumcarbonat oder ein Gemisch davon ist.

16. Verfahren nach einem der Ansprüche 1 bis 15, bei dem der Carboxylierungsgrad des wenigstens einen modifizierten Polysaccharids im Bereich von 0,4 bis 2,0, 0,5 bis 1,8, 0,6 bis 1,6, oder 0,7 bis 1,5 liegt.

17. Verfahren nach einem der Ansprüche 1 bis 16, bei dem die intrinsische Viskosität des wenigstens einen modifizierten Polysaccharids im Bereich von 5 bis 250 ml/g liegt, bevorzugt 5 bis 220 ml/g, und bevorzugter 10 bis 200 ml/g.

18. Verfahren nach einem der Ansprüche 1 bis 17, bei dem das wenigstens eine modifizierte Polysaccharid einen Carboxylierungsgrad von 1 oder mehr und eine intrinsische Viskosität im Bereich von 5 bis 250 ml/g aufweist, bevorzugt 5 bis 150 ml/g, und bevorzugter von 10 bis 100 ml/g.

19. Verfahren nach einem der Ansprüche 1 bis 17, bei dem das wenigstens eine modifizierte Polysaccharid einen Carboxylierungsgrad von kleiner 1 und eine intrinsische Viskosität im Bereich von 5 bis 70 ml/g aufweist, bevorzugt 5 bis 50 ml/g, und bevorzugter 10 bis 30 ml/g.

20. Verfahren nach einem der Ansprüche 1 bis 19, bei dem die intrinsische Viskosität des modifizierten Polysacharids, das in Schritt b) bereitgestellt wird, durch die Zugabe von wenigstens einem Wasserstoffperoxid, gegebenenfalls in der Gegenwart eines Alkaliperoxids, in zwei bis fünf Schritten eingestellt wird.

21. Verfahren nach einem der Ansprüche 1 bis 20, bei dem der Mahlschritt d) bei einer Temperatur von 30 bis 110°C ausgeführt wird, bevorzugt von 55 bis 105°C.

22. Verfahren nach einem der Ansprüche 1 bis 21, bei dem der Mahlschritt d) chargenweise oder kontinuierlich ausgeführt wird, bevorzugt kontinuierlich.

23. Selbstbindende Pigmentpartikelsuspension, erhältlich durch das Verfahren gemäss einem der Ansprüche 1 bis 22.

24. Verwendung der selbstbindenden Pigmentpartikelsuspension gemäss Anspruch 23 in Papier-, Kunststoff-, Farb-, Beton- und/oder Agrarindustrieanwendungen.

25. Verwendung nach Anspruch 24, bei der die selbstbindende Pigmentpartikelsuspension im Wet-End-Prozess einer Papiermaschine, in Zigarettenpapier- und/oder Beschichtungsanwendungen verwendet wird, oder als Support für Rotationstiefdruck und/oder Offsetdruck und/oder Digitaldruck.

26. Verwendung nach Anspruch 24, bei der die selbstbindende Pigmentpartikelsuspension verwendet wird, um die Sonnenlicht- und UV-Aussetzung von Pflanzenblättern zu verringern.

## Revendications

1. Procédé de préparation de particules de pigment auto-liantes comprenant les étapes suivantes consistant à :
a) fournir une suspension aqueuse de matière pigmentaire minérale ;
b) fournir au moins un liant polymère, le liant comprenant au moins un polysaccharide modifié ayant un degré de carboxylation compris dans la plage allant de 0,4 à 2,0 et ayant une viscosité intrinsèque comprise dans la plage allant de 3 à 300 ml/g ,
le carbone du liant montrant un degré de transformation nucléaire de ¹⁴C en ¹⁴N compris entre 900 et 920 transformations par heure et par gramme de carbone dans le liant ;
c) mélanger le liant de l'étape b) avec la suspension aqueuse de matière pigmentaire minérale de l'étape a) et ajuster la teneur en solides de la suspension obtenue de sorte qu'elle soit de 45 à 80 % en poids, par rapport au poids total de la suspension ;
d) broyer la suspension aqueuse de matière minérale de l'étape c) jusqu'à ce que la fraction des particules de pigment auto-liantes ayant une taille de particule inférieure à 1 µm soit supérieure à 5 % en poids, par rapport au poids total des particules de pigment,
dans l'étape c), le liant étant ajouté à la suspension aqueuse de pigment minéral en une quantité de 0,1 à 10,0 % en poids, par rapport au poids total de la suspension.

2. Procédé selon la revendication 1, dans lequel au moins un polysaccharide modifié est la carboxyméthylcellulose.

3. Procédé selon la revendication 1 ou 2, dans lequel dans l'étape c), le liant est ajouté à la suspension aqueuse de pigment minéral en une quantité de 0,2 à 5 % en poids, de préférence de 0,25 à 3,0 % en poids, par rapport au poids total de la suspension.

4. Procédé selon l'une quelconque des revendications 1 à 3, dans lequel le liant est sous la forme d'une solution ou d'une matière sèche, de préférence sous la forme d'une solution aqueuse ayant une concentration en liant de 1 à 70 % en poids, de préférence de 2 à 55 % en poids, plus préférablement de 5 à 50 % en poids, et de manière préférée entre toutes de 30 à 50 % en poids, par rapport au poids total de la solution.

5. Procédé selon l'une quelconque des revendications 1 à 4, dans lequel le liant se compose uniquement d'au moins un polysaccharide modifié, de préférence de carboxyméthylcellulose.

6. Procédé selon l'une quelconque des revendications 1 à 5, dans lequel le liant se compose d'un mélange de deux types de polysaccharide modifié ou plus, dans lequel au moins un a un degré de carboxylation compris dans la plage allant de 0,4 à 2,0 et une viscosité intrinsèque comprise dans la plage allant de 3 à 300 ml/g.

7. Procédé selon l'une quelconque des revendications 1 à 6, dans lequel la teneur en solides est ajustée de sorte qu'elle soit de 50 à 80 % en poids, plus préférablement de 60 à 79 % en poids, de manière préférée entre toutes de 65 à 78 % en poids, par rapport au poids total de la suspension.

8. Procédé selon l'une quelconque des revendications 1 à 7, dans lequel les groupes carboxyliques d'au moins un polysaccharide modifié sont au moins partiellement neutralisés par l'ajout à la suspension aqueuse de matière pigmentaire minérale avant ou pendant l'étape de broyage d) d'un ou plusieurs cations polyvalents, les cations polyvalents étant de préférence choisis parmi Sr²⁺, Ca²⁺ ou Mg²⁺, et de manière préférée entre toutes du Ca²⁺ est ajouté sous forme de Ca(OH)₂ en suspension et/ou solution.

9. Procédé selon l'une quelconque des revendications 1 à 7, dans lequel les groupes carboxyliques d'au moins un polysaccharide modifié sont au moins partiellement neutralisés par l'ajout à la suspension aqueuse de matière pigmentaire minérale avant ou pendant l'étape de broyage d) d'un ou plusieurs cations polyvalents, formés *in situ,* par ajout d'un acide, de préférence H₃PO₄, ou d'un sel de réaction acide tel que Na₂HPO₄, de préférence CaHPO₄.

10. Procédé selon l'une quelconque des revendications 1 à 7, dans lequel les groupes carboxyliques d'au moins un polysaccharide modifié sont au moins partiellement neutralisés par l'ajout à la suspension aqueuse de matière pigmentaire minérale avant ou pendant l'étape de broyage d) d'un ou plusieurs cations monovalents, les cations monovalents étant de préférence choisis parmi Li⁺, Na⁺ ou K⁺.

11. Procédé selon l'une quelconque des revendications 1 à 7, dans lequel les groupes carboxyliques d'au moins un polysaccharide modifié sont au moins partiellement neutralisés par l'ajout à la suspension aqueuse de matière pigmentaire minérale avant ou pendant l'étape de broyage d) d'une combinaison d'un ou plusieurs cations polyvalents ou d'un ou plusieurs cations monovalents, les cations polyvalents étant de préférence choisis parmi Sr²⁺, Ca²⁺ ou Mg²⁺, et de manière préférée entre toutes du Ca²⁺ est ajouté sous forme de Ca(OH)₂ en suspension et/ou solution et les cations monovalents étant de préférence choisis parmi Li⁺, Na⁺ ou K⁺.

12. Procédé selon l'une quelconque des revendications 1 à 11, dans lequel l'étape de broyage d) est réalisée jusqu'à ce que la fraction de particules de pigment auto-liantes ayant une taille de particule inférieure à 1 µm soit supérieure à 20 % en poids, de préférence supérieure à 60 % en poids, plus préférablement supérieure à 75 % en poids, et de manière préférée entre toutes supérieure à 85 % en poids, par rapport au poids total des particules de pigment.

13. Procédé selon l'une quelconque des revendications 1 à 12, dans lequel avant ou pendant ou après les étapes c) et/ou d), un agent de dispersion est ajouté.

14. Procédé selon l'une quelconque des revendications 1 à 13, dans lequel ladite matière pigmentaire minérale est choisie parmi le carbonate de calcium, les minéraux contenant du carbonate de calcium, les charges mixtes à base de carbonate ou des mélanges de ceux-ci, et dans lequel les minéraux contenant du carbonate de calcium comprennent de préférence la dolomite, et les charges mixtes à base de carbonate sont de préférence choisies parmi le calcium associé à du magnésium, de l'argile, du talc, les mélanges de talc-carbonate de calcium, les mélanges de carbonate de calcium-kaolin, ou les mélanges de carbonate de calcium naturel avec de l'hydroxyde d'aluminium, du mica ou avec des fibres synthétiques ou naturelles ou des co-structures de minéraux, de préférence des co-structures de talc-carbonate de calcium ou de talc-dioxyde de titane ou de carbonate de calcium-dioxyde de titane.

15. Procédé selon la revendication 14, dans lequel le carbonate de calcium est un carbonate de calcium naturel broyé, un carbonate de calcium précipité, un carbonate de calcium modifié ou un mélange de ceux-ci.

16. Procédé selon l'une quelconque des revendications 1 à 15, dans lequel le degré de carboxylation d'au moins un polysaccharide modifié est compris dans la plage allant de 0,4 à 2,0, de 0,5 à 1,8, de 0,6 à 1,6, ou de 0,7 à 1,5.

17. Procédé selon l'une quelconque des revendications 1 à 16, dans lequel la viscosité intrinsèque d'au moins un polysaccharide modifié est comprise dans la plage allant de 5 à 250 ml/g, de préférence de 5 à 220 ml/g, et plus préférablement de 10 à 200 ml/g.

18. Procédé selon l'une quelconque des revendications 1 à 17, dans lequel au moins un polysaccharide modifié a un degré de carboxylation de 1 ou plus, et une viscosité intrinsèque comprise dans la plage allant de 5 à 250 ml/g, de préférence de 5 à 150 ml/g, et plus préférablement de 10 à 100 ml/g.

19. Procédé selon l'une quelconque des revendications 1 à 17, dans lequel au moins un polysaccharide modifié a un degré de carboxylation inférieur à 1 et une viscosité intrinsèque comprise dans la plage allant de 5 à 70 ml/g, de préférence de 5 à 50 ml/g, et plus préférablement de 10 à 30 ml/g.

20. Procédé selon l'une quelconque des revendications 1 à 19, dans lequel la viscosité intrinsèque du polysaccharide modifié fourni dans l'étape b) est ajustée par ajout d'au moins du peroxyde d'hydrogène, facultativement en présence d'un peroxyde alcalin, en deux à cinq étapes.

21. Procédé selon l'une quelconque des revendications 1 à 20, dans lequel l'étape de broyage d) est réalisée à une température de 30 à 110 °C, de préférence de 55 à 105 °C.

22. Procédé selon l'une quelconque des revendications 1 à 21, dans lequel l'étape de broyage d) est réalisée de manière discontinue ou continue, de préférence de manière continue.

23. Suspension de particules de pigment auto-liantes, pouvant être obtenue par le procédé selon l'une quelconque des revendications 1 à 22.

24. Utilisation de la suspension de particules de pigment auto-liantes selon la revendication 23 dans du papier, du plastique, de la peinture, du béton et des applications agricoles.

25. Utilisation selon la revendication 24, dans laquelle la suspension de particules de pigment auto-liantes est utilisée dans le procédé de la partie humide d'une machine à papier, dans du papier à cigarette et/ou des applications de couchage, ou en tant que support pour la rotogravure et/ou l'offset et/ou l'impression numérique.

26. Utilisation selon la revendication 24, dans laquelle la suspension de particules de pigment auto-liantes est utilisée pour réduire la lumière du soleil et l'exposition aux UV de feuilles de plante.
